# EUROPEAN PATENT APPLICATION

(11) **EP 4 778 812 A1**
(43) Date of publication of application: **22.07.2026**
(21) Application number: 24881980.7
(22) Date of filing: 29.07.2024
(51) Int. Cl.: B62D 25/20, F16F 7/12

(54) **SIDE SILL STRUCTURE OF AUTOMOBILE**

(30) Priority: 25.10.2023 JP 2023182968
(71) Applicant: JFE Steel Corporation, Tokyo 100-0011 (JP)
(72) Inventor: ISHIKAWA, Toshiharu, Tokyo 100-0011 (JP)
(74) Representative: Hoffmann Eitle
(86) International application number: PCT/JP2024/026986
(87) International publication number: WO 2025/088862

(57) **Abstract**

A side sill structure 1 according to the present invention includes: an impact absorbing structure 20 that absorbs an impact input to a side sill 10 at a time of a side crash of a vehicle, the impact absorbing structure 20 disposed in the side sill 10, having an end 20a on a vehicle inner side in a vehicle width direction connected to a longitudinal surface portion 11a of a side sill inner 11; and a recess 30 that restrains the end 20a on the vehicle inner side in a vehicle vertical direction, the recess 30 formed in the longitudinal surface portion 11a of the side sill inner 11, in which the impact absorbing structure 20 includes a pair of wave-shaped components 21 and 23 having a wave shape in which a protruding shape and a recessed shape are alternately continuous in the vehicle longitudinal direction, the pair of wave-shaped components 21 and 23 arranged in the vehicle vertical direction, and a recessed shape 21b of the upper wave-shaped component 21 and a recessed shape 23b of the lower wave-shaped component 23 are arranged to face each other and are joined in a state where the facing recessed shapes 21b and 23b are shifted in the vehicle longitudinal direction.

## Description

### Field

The present invention relates to a side sill structure of an automobile that absorbs an impact input at the time of a side crash of the vehicle to increase crashworthiness.

### Background

In general, in an electric vehicle, a battery module is mounted below a floor panel between left and right side sills in a vehicle width direction. The battery module includes a battery cell (also referred to as a battery pack) and a battery case for storing the battery cell.

In the battery case, a member having high rigidity and high yield strength is used to play a role of protecting the battery cell from an impact load input at the time of a crash of the vehicle. Furthermore, a member that plays a role of absorbing crash energy by being deformed by an impact (load) input to the vehicle at the time of a crash is disposed around the battery case. In particular, at the time of a side crash, the side sill is deformed with respect to a load input from a side of the vehicle to absorb the crash energy, and the remaining load that cannot be absorbed is received by a floor crossmember or a battery case side member to protect the battery cell.

If the deformation amount required for the side sill to absorb the crash energy at the time of a side crash can be reduced, the portion of the side sill that absorbs the crash energy can be reduced to provide a space-saving side sill structure. In an electric vehicle having such a side sill structure, since the volume of the battery module can be increased by the amount of reduction of the side sill, the mounting amount of the battery increases, which leads to an increase in the cruising distance. From the above, in the electric vehicles, a space-saving side sill structure having excellent crash energy absorption performance at the time of a side crash is on demand.

Several types of technology for enhancing the stiffness of the side sill and enhancing the crash energy absorbing performance at the time of a side crash have been proposed so far. For example, Patent Literature 1 discloses a side member structure (side sill) of a vehicle body including an impact absorbing member that is disposed inside a tube extending in a front-rear direction of the vehicle body, has a plurality of ridgeline portions in a vehicle width direction of the vehicle body at intervals, and has a wave shape that rises and falls in the front-rear direction of the vehicle body.

Patent Literature 2 discloses a side structure (side sill) of a vehicle body including an impact absorbing member having a web that is disposed inside a cylindrical body extending in a front-rear direction of the vehicle body and is a corrugated plate that alternately bends up and down in the front-rear direction.

Patent Literature 3 and Patent Literature 4 disclose a vehicle body structure including a stiffened member constituting at least a part of a continuous tubular structure formed inside a side sill, in which the continuous tubular structure has a shape in which a plurality of polygonal closed cross-sections are continuous when viewed from a vehicle width direction.

Patent Literature 5 discloses a vehicle body structure in which an energy absorbing member that is a corrugated plate extending in a vehicle width direction and is repeatedly bent or curved up and down is disposed and fixed in a side sill.

### Citation List

### Patent Literatures

Patent Literature 1: JP 2021-146973 A
Patent Literature 2: Japanese Patent No. 7095821
Patent Literature 3: JP 2020-111267 A
Patent Literature 4: JP 2021-024350 A
Patent Literature 5: JP 2023-056569 A

### Summary

### Technical Problem

Patent Literature 1 describes that, even when an impact is applied in a side pole crash, a locally large impact energy (which corresponds to "crash energy" in the present application. Hereinafter, the same applies.) can be efficiently absorbed by the entire impact absorbing member. Furthermore, Patent Literature 2 describes that, even when an impact load acts in the vehicle width direction, impact energy (corresponding to the crash energy in the present application) can be efficiently absorbed, that deformation to the vehicle inner side can be suppressed, and that a battery case accommodating a battery pack can be effectively protected. However, in the technology disclosed in Patent Literatures 1 and 2, since the impact absorbing member having a wave shape is formed of one metal plate, the stiffness is low, and deformation in which an opening having a wave shape opens in the vehicle longitudinal direction with respect to an impact load is likely to occur. Then, when the wave-shaped opening is deformed to open, a crash energy absorption characteristic deteriorates.

Patent Literature 3 describes that, since the reaction force of the stiffened member is improved by suitably arranging the stiffened member inside the side sill, the side crashworthiness can be improved. However, since the continuous tubular structure expands and contracts in the front-rear direction of the vehicle body at the time of a side crash, the continuous tubular structure may be deformed by receiving a force to push in the front-rear direction of the vehicle body, and the originally expected reaction force of the stiffened member may not be secured.

Patent Literature 4 describes that the vehicle body structure according to Patent Literature 3 is further provided with a component that suppresses deformation of the continuous tubular structure in the front-rear direction of the vehicle body, whereby deformation of the continuous tubular structure in the front-rear direction of the vehicle body at the time of a side crash can be restricted. Furthermore, it is expected that the reaction force of the stiffened member can be improved and that the crash energy absorbing performance can be improved. However, since the vehicle body structure according to Patent Literature 4 is provided with the component that suppresses deformation, the number of components and the weight of the components increase.

Patent Literature 5 describes that it is possible to make the energy absorbing member in the side sill to be easily crushed when a crash load is input at the time of a side crash, thereby making it easier for the crash energy to be well absorbed. However, in a case where the energy absorbing member is formed by bonding two metal plates to each other, a polygonal shape portion and a bonded portion are obtained. However, since there is a difference in stiffness between the polygonal shape portion and the bonded portion, there is a difference in crashworthiness depending on the crash position. In order to reduce such a difference in crashworthiness, it is effective to improve the stiffness of the bonded portion, but for this purpose, it is necessary to increase the plate thickness, which leads to an increase in weight.

In addition, in the technology disclosed in Patent Literature 5, in a case where the polygonal shape portion is produced using an extruded material, a method of gradually changing the cross-sectional area in a crash direction or a method of inducing buckling by forming a bead unit perpendicular to the crash direction is adopted for stable buckling at the time of a crash. However, since the cross section of the extruded material is constant in the extrusion direction, it is extremely difficult to gradually change the cross-sectional area, and in the case of forming the bead unit, the number of steps is increased, which leads to an increase in the manufacturing cost.

The present invention has been made to solve the above problems, and an object thereof is to provide a side sill structure of an automobile in which crashworthiness at the time of a side crash is improved without increasing the weight or the manufacturing cost.

### Solution to Problem

A side sill structure according to the present invention includes: a side sill having: a side sill inner extending in a vehicle longitudinal direction and having a groove shape opened toward a vehicle outer side in a vehicle width direction; and a side sill outer extending in the vehicle longitudinal direction and having a groove shape opened toward a vehicle inner side in the vehicle width direction, the side sill being formed by joining the side sill inner and the side sill outer to each other with the opening sides facing each other; an impact absorbing structure that absorbs an impact input to the side sill at a time of a side crash of a vehicle, the impact absorbing structure disposed in the side sill, having an end on a vehicle inner side in the vehicle width direction connected to a bottom portion of the groove shape of the side sill inner, and/or having an end on a vehicle outer side in the vehicle width direction connected to a bottom portion of the groove shape of the side sill outer; and a vertical restraint structure that restrains the end on the vehicle inner side in a vehicle vertical direction at the time of the side crash of the vehicle, the vertical restraint structure formed at the bottom portion of the side sill inner. Further, the impact absorbing structure includes: a pair of wave-shaped components having a wave shape in which a protruding shape and a recessed shape are alternately continuous in the vehicle longitudinal direction in a cross section orthogonal to the vehicle width direction, the pair of wave-shaped components arranged in the vehicle vertical direction, the pair of wave-shaped components is made of a metal plate, and the wave-shaped component on an upper side and the wave-shaped component on a lower side are arranged in such a manner that the recessed shape of the wave-shaped component on the upper side and the recessed shape of the wave-shaped component on the lower side face each other, and are joined in a state where the facing recessed shapes are shifted in the vehicle longitudinal direction.

It is preferable that the vertical restraint structure be a recess provided in the bottom portion of the groove shape in the side sill inner, the recess being recessed toward the vehicle inner side in the vehicle width direction, and the end of the impact absorbing structure on the vehicle inner side be inserted into the recess.

It is preferable that a distal end of the impact absorbing structure on the vehicle outer side in the vehicle width direction abut against the bottom portion of the groove shape in the side sill outer.

It is preferable that a shift amount W2 of the recessed shapes in the vehicle longitudinal direction facing each other in the upper and lower wave-shaped components be in a range of 20% to 50% of a center-to-center distance W1 between the protruding shape and the recessed shape adjacent to each other in the vehicle longitudinal direction in the wave-shaped components.

It is preferable that a recess amount D of the recess formed in the side sill inner be 0.8 times or more and 1.2 times or less a height h of the impact absorbing structure in the vehicle vertical direction.

It is preferable that the wave-shaped components be made of a metal plate having a tensile strength of a 590 MPa class or higher.

### Advantageous Effects of Invention

According to the present invention, it is possible to increase the buckling strength against an impact load input to a side sill at the time of a side crash and to crush an impact absorbing structure while maintaining a high deformation resistance state. In addition, the deformation amount in the vehicle width direction can be reduced, and high crash energy absorption characteristics can be obtained. In addition, since a recessed shape of an upper wave-shaped component and a recessed shape of a lower wave-shaped component in the impact absorbing structure face each other and are joined to each other in a vertically asymmetric manner in a state of being shifted in the vehicle longitudinal direction, the positions in the vehicle longitudinal direction of ridgelines of protruding shapes and recessed shapes in each of the wave-shaped components can be dispersed. Furthermore, the buckling load (peak load) at the time of a side crash can be kept low, and a difference (variation) in crashworthiness depending on the position to which the impact load is input can be made less likely to occur. In addition, in a case where the present invention is applied to an electric vehicle, the space required for absorbing crash energy can be reduced, and thus the volume of a battery module mounted on the electric vehicle can be increased. Furthermore, since the impact absorbing structure of the present invention has high bending stiffness, it is not necessary to increase the plate thickness in order to improve the stiffness, and thus an increase in the weight of the vehicle body can also be suppressed.

### Brief Description of Drawings

FIG. 1 is a diagram illustrating an example of a side sill structure according to an embodiment of the present invention ((a) Cross-sectional view orthogonal to vehicle longitudinal direction and (b) Cross-sectional view orthogonal to vehicle width direction).
FIG. 2 is a graph for describing an ideal load-stroke curve of a side sill structure at the time of a side crash of a vehicle (solid line: load-stroke curve in a conventional side sill structure, dashed line: ideal load-stroke curve).
FIG. 3 is a developed view of an impact absorbing structure of the side sill structure according to the embodiment of the present invention.
FIG. 4 is a diagram for explaining a shift amount W2 in the vehicle longitudinal direction between a wave-shaped component on an upper side of the vehicle body and a wave-shaped component on a lower side of the vehicle body of the impact absorbing structure in the side sill structure according to the embodiment of the invention.
FIG. 5 is a diagram illustrating an example of a vehicle side structure including the side sill structure according to the embodiment of the invention.
FIG. 6 is a diagram illustrating a modification of a vertical restraint structure that restrains an end on the vehicle inner side of an impact absorbing structure in the vehicle vertical direction in the side sill structure according to the embodiment of the invention.
FIG. 7 is a diagram for explaining a structure for support that supports the impact absorbing structure disposed in the side sill in the side sill structure according to the embodiment of the invention.
FIG. 8 is a diagram for explaining a test piece to be analyzed in a crashworthiness test simulating a side crash of a vehicle in Example 1.
FIG. 9 is a diagram illustrating a side sill structure to be tested in the crashworthiness test simulating a side crash of a vehicle in Example 1.
FIG. 10 is a diagram illustrating a deformation state of an impact absorbing structure in a crashworthiness analysis simulating a side crash of a vehicle in Example 1 ((a) Top view of impact absorbing structure, (b) Perspective view of impact absorbing structure viewed from the vehicle outer side, and (c) Cross-sectional view of side sill structure).
FIG. 11 is a diagram for explaining a deformation behavior of the impact absorbing structure in the crashworthiness analysis simulating a side crash of a vehicle in Example 1.
FIG. 12 is a graph illustrating a relationship between the crash energy absorption amount by the side sill structure and the maximum load input to the side sill structure in a side crash process in the crashworthiness test in Example 1.
FIG. 13 is a cross-sectional view of an impact absorbing structure subjected to a crashworthiness test of a side crash process in Example 2 ((a) Invention Example 3, (b) Comparative Example 6 and Comparative Example 7, and (c) Comparative Example 8).
FIG. 14 is a cross-sectional view illustrating a deformation behavior of a side sill structure at the time of a side crash in Example 2 ((a) Side sill structure of Invention Example 3, and (b) Side sill structure of Comparative Example 6).
FIG. 15 illustrates load-stroke curves obtained by crashworthiness analysis for a side crashworthiness test of test pieces of Invention Example 3 and Comparative Example 6 in Example 2.
FIG. 16 is a graph illustrating (a) Load-stroke curves and (b) Transition of crash energy absorption obtained by crashworthiness analysis for a side crashworthiness test of test pieces of Invention Example 3, Comparative Example 7, and Comparative Example 8 in Example 2.

### Description of Embodiments

### <Background of Present Invention>

In any of the technologies according to Patent Literatures 1 to 5 described above, a member having a wave shape in which a shape bent or curved in the vehicle vertical direction is repeated in the vehicle longitudinal direction (Patent Literatures 1 and 2: impact absorbing member, Patent Literatures 3 and 4: stiffened member, and Patent Literature 5: energy absorbing member) is disposed in the side sill. Hereinafter, a structure in which a wave-shaped member is disposed in the side sill is referred to as a "conventional side sill structure".

In general, in a side sill structure, a load (impact load) input to the side sill at the time of a side crash is transmitted to a high yield strength member such as a crossmember disposed on the vehicle inner side, thereby allowing a reaction force from the high yield strength member to crush the side sill structure to absorb the crash energy. In the process of crushing the conventional side sill structure, buckling deformation occurs in a bellows-shaped state in which the wave-shaped member disposed in the side sill waves in such a manner as to form a plurality of folds. In the following description, buckling deformation in a lantern-shape ("bellows-shaped" or "sausage-shaped") is also referred to as a "lantern-shaped buckling mode" or an "axial crush mode".

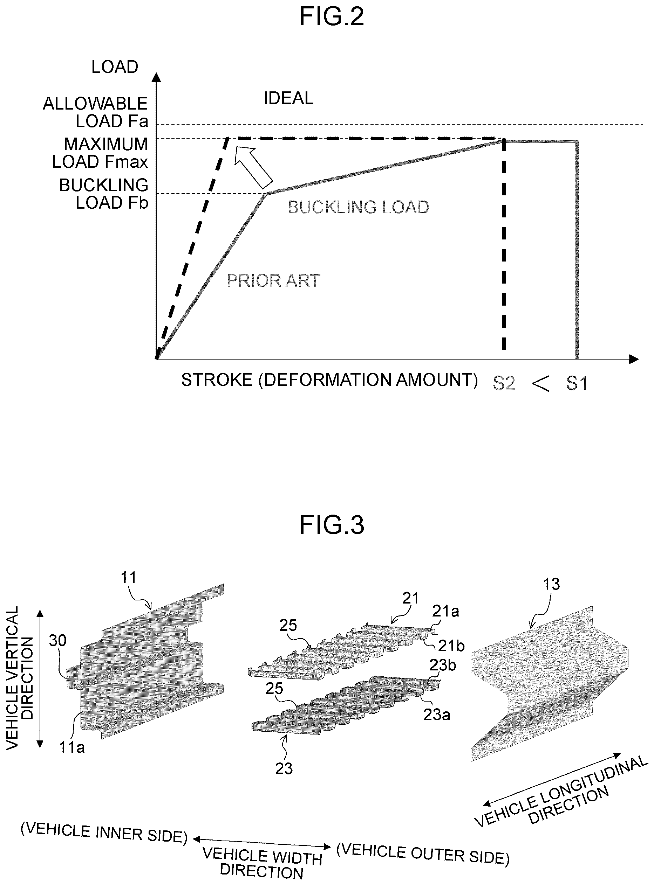

FIG. 2 illustrates a load-stroke curve schematically representing a relationship between the load input to the side sill and a stroke, which is an intrusion amount of a crash body to the vehicle inner side, at the time of a side crash in which a crash body collides with a side of a vehicle having a conventional side sill structure in which a wave-shaped member is disposed in the side sill.

In a graph illustrated in FIG. 2, the load on the vertical axis represents a contact reaction force from a high yield strength member such as a crossmember, and a value obtained by integrating the load with a stroke (deformation amount in the vehicle width direction of the side sill structure), namely, an area surrounded by the load-stroke curve represents the crash energy absorption amount.

In the conventional side sill structure, as in the load-stroke curve indicated by a solid line in FIG. 2, after elastic deformation, the ridgeline of the wave-shaped member undergoes buckling deformation in a lantern shape (lantern-shaped buckling mode), and the load continues to increase as the stroke increases.

Normally, an allowable load (buckling strength Fa) is set to a high yield strength member such as a crossmember. Therefore, in order to better protect a battery case with a high yield strength member or the like at the time of a side crash, the maximum load (Fmax) needs to be less than or equal to the allowable load (Fa) as in the load-stroke curve of the solid line illustrated in FIG. 2.

Therefore, in the conventional side sill structure, in order to make the maximum load (Fmax) less than or equal to the allowable load (Fa) of the high yield strength member, it is necessary to set the plate thickness and the material (for example, yield stress) of the metal plate constituting the wave-shaped member so that the wave-shaped member undergoes buckling deformation with a buckling load (Fb) lower than the maximum load (Fmax). Therefore, in the side sill structure in which the wave-shaped member is disposed, it is necessary to have a structure in which the deformation amount (S1 in FIG. 2) of the side sill is increased so that a desired crash energy absorption amount can be obtained at the time of a side crash.

Meanwhile, in the electric vehicles, in order to increase the volume of a battery module, it is desired to reduce the deformation amount of a side sill necessary for the side sill structure to absorb predetermined crash energy. Therefore, in order to reduce the stroke while securing the crash energy absorption amount equivalent to that of the conventional side sill structure, the inventor has conceived that a side sill structure that implements an ideal load-stroke curve indicated by a broken line in FIG. 2 may be used.

The ideal load-stroke curve illustrated in FIG. 2 increases the stiffness of the side sill structure to increase the rising speed of the load generated in the side sill at the time of a side crash, and suppresses an increase in the load in a crash process after the buckling deformation while increasing the buckling load to about the maximum load (Fmax) of the conventional side sill structure to maintain the load constant. It is conceived that, in a side sill structure in which such a load-stroke curve can be achieved, the deformation amount (S2 in FIG. 2) of the side sill can be reduced while securing the necessary crash energy absorption amount.

Next, the inventor has studied a specific structure of a side sill structure capable of achieving the ideal load-stroke curve illustrated in FIG. 2. The stiffness and the buckling load of the side sill structure can be adjusted by appropriately selecting the plate thickness and the material of the wave-shaped member disposed in the side sill; however, the increase in the load in the crash process after the buckling deformation cannot be suppressed to be maintained constant if only by selecting the plate thickness and the material.

Therefore, the inventor has repeated studies to solve such a problem. In the studies, the inventor has focused on a factor for a load to gradually increase after buckling deformation occurs first in a conventional side sill structure. It has been inferred that, as a result, in the conventional side sill structure, in the process in which the crash body intrudes into the vehicle inner side, after the first buckling deformation occurs at an end on the vehicle outer side of the wave-shaped member disposed in the side sill, buckling deformation occurs one after another in a bellows shape while waving in such a manner as to have a plurality of folds from the vehicle outer side toward the vehicle inner side, whereby the load increases.

Therefore, in order to achieve the ideal load-stroke curve illustrated in FIG. 2, the inventor has conceived of suppressing the buckling deformation continuously generated in a bellows shape while waving in such a manner as to have a plurality of folds after the first buckling deformation occurs in the wave-shaped member disposed in the side sill.

The inventor has found that, by joining the wave-shaped members in the side sill to each other in a state of being shifted in the vehicle longitudinal direction in a vertically asymmetric manner, it is possible to suppress the buckling deformation continuously generated in a bellows shape while waving in such a manner as to form a plurality of folds, whereby it is made possible to allow the buckling deformation to transition with a constant load.

As described above, it has been found that, as compared with the conventional side sill structure, the maximum load is increased by appropriately selecting the plate thickness and the material to enhance the stiffness, and that the deformation amount can be reduced while the necessary amount of crash energy is secured by allowing the load after buckling to transition constantly, whereby a compact side sill structure can be implemented. The present invention has been made on the basis of the above information, and the structure thereof will be described below.

### <Side Sill Structure of Automobile>

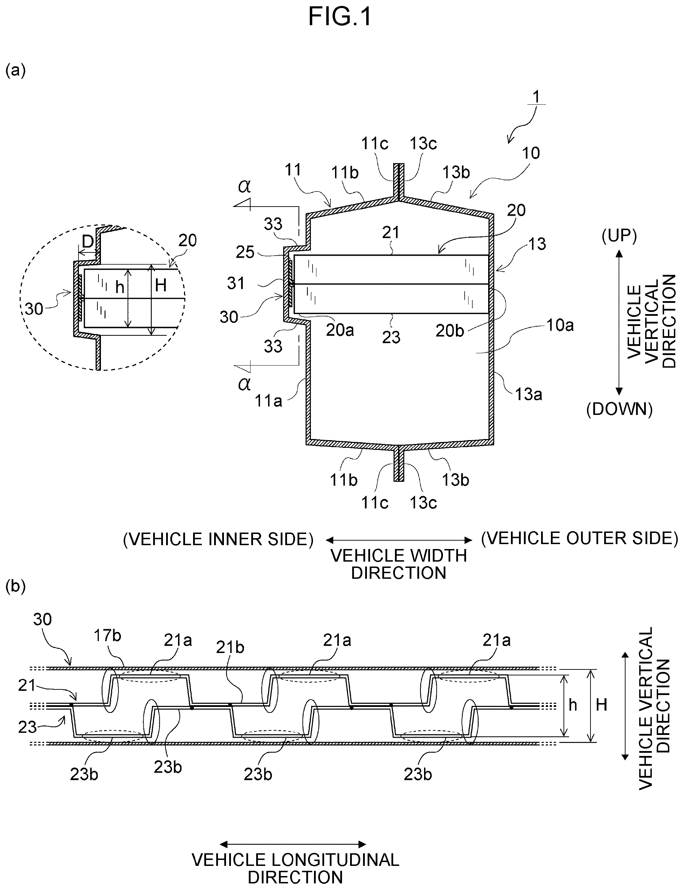

As illustrated in FIG. 1 as an example, a side sill structure 1 according to an embodiment of the present invention includes a side sill 10 having a side sill inner 11 and a side sill outer 13, an impact absorbing structure 20, and a recess 30. Hereinafter, each component of the side sill structure 1 will be described. In the present application, terms related to a direction such as "vehicle longitudinal direction", "vehicle width direction", and "vehicle vertical direction" and terms related to a position such as "vehicle outer side", "vehicle inner side", "vehicle upper side", and "vehicle lower side" represent directions and positions in a state where the side sill structure 1 is disposed in an actual vehicle.

### <<Side Sill>>

As illustrated in FIG. 1, the side sill 10 is obtained by joining the side sill inner 11 and the side sill outer 13.

The side sill inner 11 has a longitudinal surface portion 11a substantially parallel to the vehicle vertical direction and a pair of lateral surface portions 11b each continuous from one of the upper end and the lower end of the longitudinal surface portion 11a toward the vehicle outer side. In the side sill inner 11, a groove shape is formed by the longitudinal surface portion 11a and the pair of lateral surface portions 11b, and the longitudinal surface portion 11a corresponds to the bottom portion of the groove shape. Furthermore, the side sill inner 11 has flange portions 11c extending from respective ends of the lateral surface portions 11b on the vehicle upper side and the vehicle lower side to the vehicle upper side and the vehicle lower side, respectively.

The side sill outer 13 has a longitudinal surface portion 13a substantially parallel to the vehicle vertical direction and a pair of lateral surface portions 13b each continuous from one of the upper end and the lower end of the longitudinal surface portion 13a toward the vehicle inner side. In the side sill outer 13, a groove shape is formed by the longitudinal surface portion 13a and the pair of lateral surface portions 13b, and the longitudinal surface portion 13a corresponds to the bottom portion of the groove shape. Furthermore, the side sill outer 13 has flange portions 13c extending from respective ends of the lateral surface portions 13b on the vehicle upper side and the vehicle lower side to the vehicle upper side and the vehicle lower side, respectively.

The flange portions 11c and the flange portions 13c are joined (for example, spot welding or the like) to each other with the opening sides of the groove shapes of the side sill inner 11 and the side sill outer 13 facing each other. As a result, the side sill 10 having a closed cross-sectional space 10a therein is formed.

Both the longitudinal surface portion 11a of the side sill inner 11 and the longitudinal surface portion 13a of the side sill outer 13 may not have a planar shape parallel to the vehicle vertical direction, and may be inclined with respect to the vehicle vertical direction or may have a curved surface shape. Similarly, the lateral surface portions 11b of the side sill inner 11 and the lateral surface portions 13b of the side sill outer 13 may not have a planar shape parallel to the horizontal plane, and may be inclined with respect to the horizontal plane or may have a curved surface shape.

### <<Impact Absorbing Structure>>

In the impact absorbing structure 20, an end 20a on the vehicle inner side in the vehicle width direction is connected to the longitudinal surface portion 11a which is the bottom portion of the groove shape in the side sill inner 11, and the impact absorbing structure 20 absorbs an impact input to the side sill 10 at the time of a side crash of the vehicle. As illustrated in FIGS. 1 and 3, the impact absorbing structure 20 has a wave shape in which a protruding shape and a recessed shape are alternately continuous in the vehicle longitudinal direction in a cross section orthogonal to the vehicle width direction, and includes a pair of wave-shaped components 21 and 23 arranged in the vehicle vertical direction. The upper wave-shaped component 21 has a wave shape in which a protruding shape 21a and a recessed shape 21b are alternately continuous in the vehicle longitudinal direction in a cross section orthogonal to the vehicle width direction. Similarly, the lower wave-shaped component 23 has a wave shape in which a protruding shape 23a and a recessed shape 23b are alternately continuous in the vehicle longitudinal direction in a cross section orthogonal to the vehicle width direction. In the upper wave-shaped component 21 and the lower wave-shaped component 23, the protruding shapes 21a and 23a are formed by a top surface and a pair of wall surfaces continuous from both ends thereof, and the recessed shapes 21b and 23b are formed by a bottom surface and a pair of wall surfaces continuous from both ends thereof.

The pair of wave-shaped components 21 and 23 is made of metal plates. In the impact absorbing structure 20, the upper wave-shaped component 21 and the lower wave-shaped component 23 are arranged such that the recessed shapes 21b of the upper wave-shaped component 21 and the recessed shapes 23b of the lower wave-shaped component 23 face each other. Furthermore, the bottom surfaces of the recessed shape 21b and the recessed shape 23b are joined to each other in a state where the recessed shape 21b and the recessed shape 23b facing each other are shifted in the vehicle longitudinal direction. The recessed shapes 21b of the upper wave-shaped component 21 and the recessed shapes 23b of the lower wave-shaped component arranged in such a manner as to face each other means that the upper wave-shaped component 21 and the lower wave-shaped component 23 are arranged in a vertically inverted state.

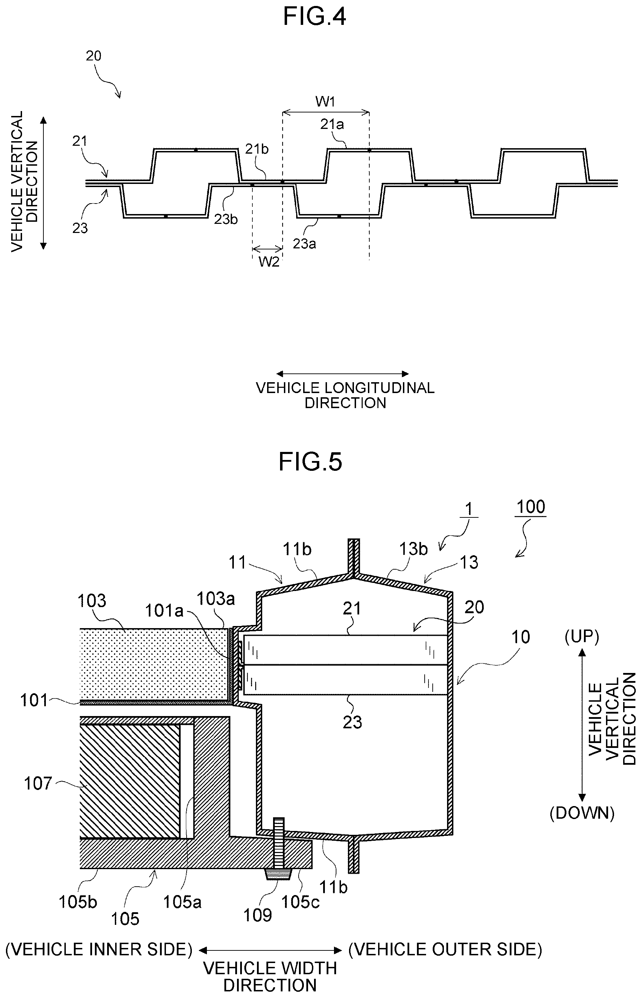

In the impact absorbing structure 20, the state in which the recessed shape 21b and the recessed shape 23b are shifted in the vehicle longitudinal direction refers to a state in which the center positions of the bottom surfaces of the recessed shapes 21b and 23b are shifted in the vehicle longitudinal direction by a predetermined shift amount W2 as illustrated in FIG. 4. It suffices to join the bottom surface of the recessed shape 21b and the bottom surface of the recessed shape 23b by spot welding, for example. As a result, the impact absorbing structure 20 is disposed in the side sill 10, and has a structure in which the pair of upper and lower wave-shaped components 21 and 23 are integrated.

Furthermore, in the present embodiment, the distal end of the impact absorbing structure 20 on the vehicle outer side in the vehicle width direction abuts on the longitudinal surface portion 13a which is the bottom portion of the groove shape of the side sill outer 13 in such a manner as to abut thereon. The distal end of the impact absorbing structure 20 on the vehicle outer side refers to an end surface of a metal plate used for the wave-shaped components 21 and 23.

As illustrated in FIG. 5 to be described later, the impact absorbing structure 20 is preferably disposed in such a manner as to overlap a floor crossmember 103 at least at a vehicle vertical position in the side sill 10. As a result, it is possible to absorb the impact input to the side sill 10 at the time of a side crash, to transmit the load to the floor crossmember 103, and to efficiently crush the impact absorbing structure 20 by the reaction force to increase the crash energy absorption amount.

### <<Recess>>

The recess 30 is provided on the longitudinal surface portion 11a, which is the groove-shaped bottom portion of the side sill inner 11, as a vertical restraint structure that restrains the end 20a on the vehicle inner side of the impact absorbing structure 20 in the vehicle vertical direction. The end 20a of the impact absorbing structure 20 on the vehicle inner side is inserted into the recess 30, and the end 20a is pressed from the vehicle vertical direction at the time of a side crash, thereby resisting displacement of the end 20a in the vehicle vertical direction. The end 20a on the vehicle inner side of the impact absorbing structure 20 inserted into the recess 30 is joined to a bottom portion 31 of the recess 30.

By referring to FIGS. 1(a) and 3, an example of a method of joining the end 20a on the vehicle inner side of the impact absorbing structure 20 and the longitudinal surface portion 11a of the side sill inner 11 will be described.

In the impact absorbing structure 20, the end 20a on the vehicle inner side in the vehicle width direction is inserted into the recess 30 formed in the longitudinal surface portion 11a of the side sill inner 11. Moreover, the end 20a is joined (spot welding or the like) to the bottom portion 31 of the recess 30 via a flange portion 25 provided at the distal end of the end 20a. The flange portion 25 may be provided over the entire length in the vehicle longitudinal direction, or may be provided intermittently in the vehicle longitudinal direction.

The effects of the side sill structure 1 according to the embodiment of the invention will be described below on the basis of a vehicle side structure 100 illustrated in FIG. 5.

### <<Vehicle Side Structure>>

The floor crossmember 103 is a vehicle body frame structural member disposed above a floor panel 101 and extending in the vehicle width direction, and each end 103a in the vehicle width direction is joined (for example, spot welding) to the longitudinal surface portion 11a which is the bottom portion of the groove shape of the side sill inner 11. A plurality of floor crossmembers 103 are provided at predetermined intervals (for example, about 300 mm) in the vehicle longitudinal direction.

A battery case 105 is disposed below the floor panel 101, and houses a battery pack 107 therein. Each side portion 105a of the battery case 105 in the vehicle width direction faces a side sill inner 11 at a predetermined interval. In the vehicle side structure 100, the side portion 105a of the battery case 105 faces a lower portion of the longitudinal surface portion 11a of the side sill inner 11.

Furthermore, a mounting flange 105c is connected to a bottom plate 105b which is a bottom portion of the battery case 105 in such a manner as to protrude toward the side sill 10. The mounting flange 105c and the lower lateral surface portion 11b of the side sill inner 11 are fastened by a fixing bolt 109, whereby the battery case 105 is held by the side sill 10.

The impact absorbing structure 20 disposed inside the side sill structure 1 is disposed in such a manner as to overlap the floor crossmember 103 in the vehicle height direction in a side view from the vehicle width direction.

### <<Effects of Side Sill Structure 1>>

In the side sill structure 1 according to the present embodiment, in the impact absorbing structure 20 disposed in the side sill 10, the recessed shapes 21b of the upper wave-shaped component 21 and the recessed shapes 23b of the lower wave-shaped component 23 are shifted in the vehicle longitudinal direction, and the bottom surfaces thereof are joined to each other in a state where the recessed shapes face each other in a vertically asymmetric manner.

In the cross-sectional view orthogonal to the vehicle width direction of the impact absorbing structure 20 illustrated in FIG. 1(b), the ridgelines (corner portions) of the protruding shapes 21a and 23a and the recessed shapes 21b and 23b have high deformation resistance against a crash load from the vehicle outer side in the vehicle width direction. Meanwhile, the top surfaces sandwiched between ridgelines of the protruding shapes 21a and 23a and having a long interval between the ridgelines (portions indicated by broken line ellipses in FIG. 1(b)) have a relatively low deformation resistance as compared with wall surfaces (portions indicated by solid line ellipses in FIG. 1(b)) having a short interval between ridgelines. Moreover, the upper wave-shaped component 21 and the lower wave-shaped component 23 in the impact absorbing structure 20 are joined so as to be shifted from each other in the vehicle longitudinal direction. As a result, as illustrated in FIG. 1(b), in the cross section orthogonal to the vehicle width direction, the portion having a relatively high deformation resistance (solid line ellipse) and a portion having a relatively low deformation resistance (broken line ellipse) face each other in the vertical direction at a position in the vehicle longitudinal direction, and there are portions having different deformation resistances in the upper wave-shaped component 21 and the lower wave-shaped component 23 in the vertical direction intermittently in the vehicle longitudinal direction.

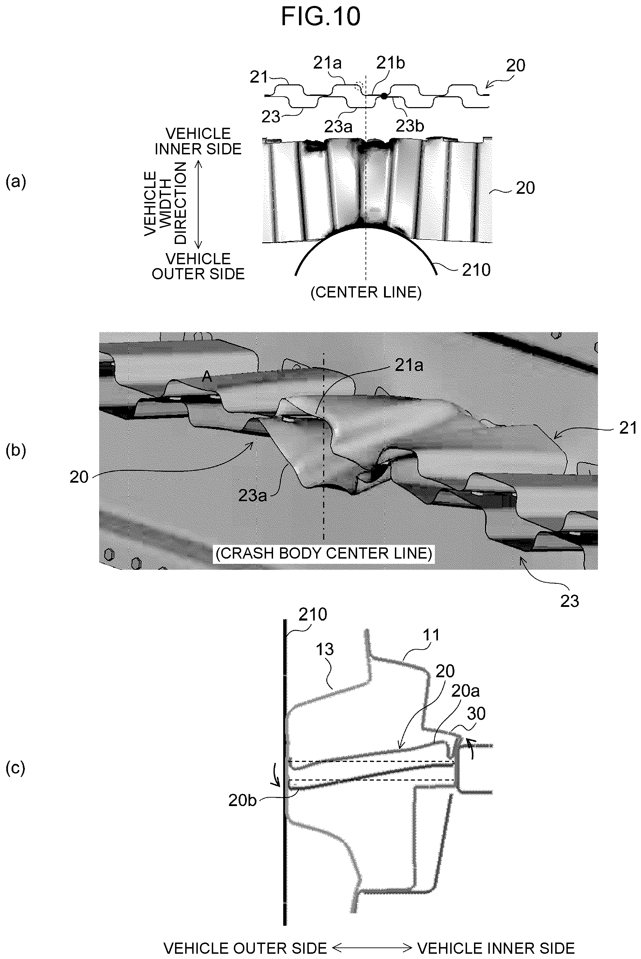

Therefore, at the time of a side crash of a vehicle including the side sill structure 1, as illustrated in FIG. 10(c) to be described later, due to the difference in deformation resistance between the upper wave-shaped component 21 and the lower wave-shaped component 23 at a position in the vehicle longitudinal direction where a crash body has made a side crash, a moment rotating about an axis in the vehicle longitudinal direction occurs, and such initial buckling deformation occurs as bending toward the outside of the plane in the rotational direction at both ends on the vehicle inner side and the vehicle outer side. Since the impact absorbing structure 20 is inclined with respect to the horizontal plane in the vehicle width direction, the impact absorbing structure 20 does not undergo bellows-shaped buckling deformation after the first buckling deformation, and portions of the both ends of the wave-shaped components 21 and 23 which are buckled and deformed further keep bending. As described above, according to the side sill structure 1 of the present embodiment, it is possible to suppress an increase in the load accompanying an increase in the stroke (deformation amount) as illustrated in FIG. 2 described above and to allow the load to transition at a load substantially equal to the maximum load.

The impact absorbing structure 20 is disposed in the side sill 10, and has a structure in which the wave-shaped component 21 and the wave-shaped component 23 are integrated. Therefore, in the impact absorbing structure 20, closed cross-sectional spaces formed by the protruding shape 21a of the upper wave-shaped component 21 and the protruding shape 23a of the lower wave-shaped component 23 are arranged repeatedly at regular intervals in the vehicle longitudinal direction. Therefore, the entire impact absorbing structure 20 has high bending stiffness (bending deformation resistance against a side crash load). As a result, local deformation of the impact absorbing structure 20 around the portion to which the impact load is input in the side sill is suppressed, and the periphery of the portion to which the crash load is input is also buckled and deformed, whereby the crash energy absorption amount can be increased.

Furthermore, in the side sill structure 1, the recess 30 is formed in the longitudinal surface portion 11a which is the bottom portion of the groove shape of the side sill inner 11, and the end 20a on the vehicle inner side of the impact absorbing structure 20 is inserted into the recess 30 to be restrained in the vehicle vertical direction. As a result, at the time of a side crash of the vehicle, the end 20a on the vehicle inner side of the impact absorbing structure 20 is prevented from being displaced in the vehicle vertical direction to cause the impact absorbing structure 20 to collapse on its side, and the end 20a is prevented from being greatly deformed in the out-of-plane direction. As a result, it is possible to suppress a decrease in the crash energy absorption amount due to the collapse of the impact absorbing structure 20 on its side or the out-of-plane deformation of the end 20a.

The impact absorbing structure 20 is disposed in such a manner as to overlap the floor crossmember 103 in the vehicle height direction in a side view from the vehicle width direction. As a result, the crash load input from the side sill outer 13 from the vehicle outer side is transmitted to a rigid component such as the floor crossmember via the impact absorbing structure 20, and the reaction force from the rigid component is transmitted to the impact absorbing structure 20 via the side sill inner 11. As a result, the impact absorbing structure 20 can be efficiently crushed, whereby the crash energy absorbing performance can be improved.

As described above, in the side sill structure 1 according to the present embodiment, the buckling strength against the impact load input to the side sill 10 at the time of a side crash is increased, and the impact absorbing structure 20 can be crushed while maintaining a high deformation resistance state, and thus high crash energy absorbing performance can be obtained.

In addition, the recessed shapes 21b of the upper wave-shaped component 21 and the recessed shapes 23b of the lower wave-shaped component 23 in the impact absorbing structure 20 are arranged to face each other, and are joined in a state where the recessed shapes 21b and 23b facing each other are shifted in the vehicle longitudinal direction. As a result, since the positions in the vehicle longitudinal direction of the ridgelines of the protruding shapes 21a and 23a and the ridgelines of the recessed shapes 21b and 23b are dispersed, a difference (variation) in crashworthiness due to the position to which the impact load is input can be made less likely to occur.

Furthermore, in the case where the side sill structure 1 is applied to an electric vehicle, a space required for absorbing crash energy in the side sill structure 1 can be reduced. Therefore, it is also made possible to increase the volume of a battery module disposed between the side sills 10 on both sides in the vehicle width direction.

In addition, in the side sill structure 1 according to the present embodiment, since the impact absorbing structure 20 has high bending stiffness, it is not necessary to increase the plate thickness of the metal plates used for the side sill structure 1 in order to improve the stiffness, and thus an increase in the weight of the vehicle body can also be suppressed.

In the side sill structure 1 according to the present embodiment, the recess 30 is formed in the longitudinal surface portion 11a of the side sill inner 11 as a vertical restraint structure that restrains the end 20a on the vehicle inner side of the impact absorbing structure 20 in the vehicle vertical direction.

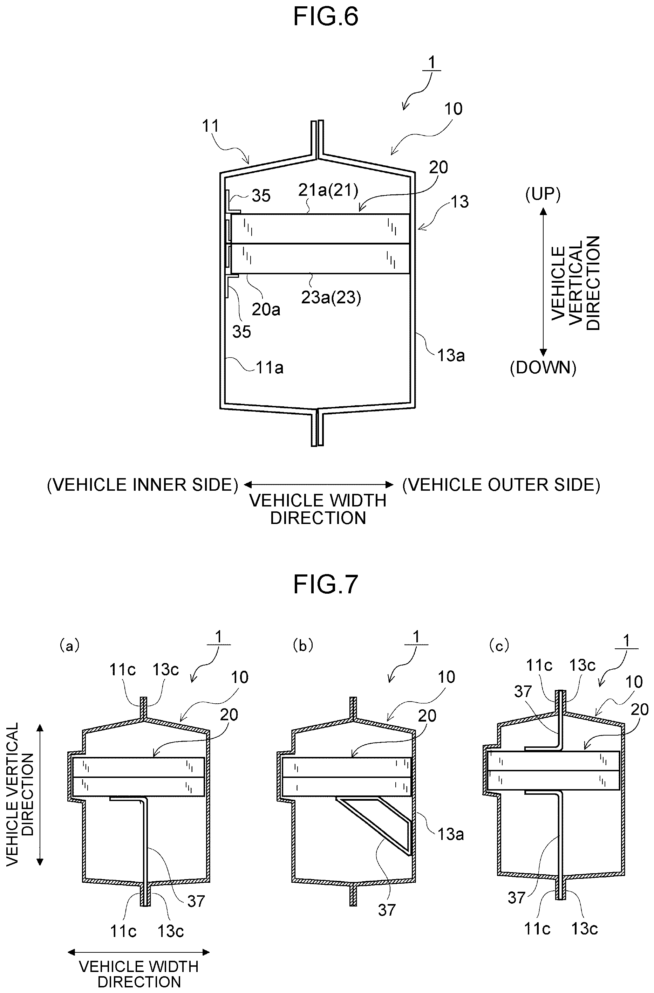

However, in the present invention, the vertical restraint structure is not limited to the recess 30. In FIG. 6, a modification of the vertical restraint structure is illustrated. In the side sill structure 1 illustrated in FIG. 6, L-shape brackets 35 are provided both above and below the end 20a on the vehicle inner side of the impact absorbing structure 20 as the vertical restraint structure. The upper L-shape bracket 35 is joined to the top surface of the upper wave-shaped component 21 and the longitudinal surface portion 11a of the side sill inner 11, and the lower L-shape bracket 35 is joined to the lower surface of the lower wave-shaped component 23 and the longitudinal surface portion 11a of the side sill inner 11. The L-shape brackets 35 may be joined to the wave-shaped components 21 and 23 and the longitudinal surface portion 11a by spot welding or the like.

As described above, also at the time of a side crash of the side sill structure 1 provided with the L-shape brackets 35 as the vertical restraint structure, the end 20a on the vehicle inner side of the impact absorbing structure 20 can be restrained in the vehicle vertical direction.

The L-shape brackets 35 are not limited to those provided over the entire length in the vehicle longitudinal direction as long as the L-shape brackets 35 can restrain the end 20a on the vehicle inner side in the vehicle vertical direction at the time of a side crash, and may be one provided intermittently in the vehicle longitudinal direction.

Moreover, the present invention is not limited to the one in which the end 20a on the vehicle inner side of the impact absorbing structure 20 is joined to the longitudinal surface portion 11a of the side sill inner 11 as in the side sill structure 1 illustrated in FIG. 1 or 6. That is, in the present invention, the flange portions may not be provided at the end on the vehicle inner side of the impact absorbing structure, and the distal end on the vehicle inner side may be an end surface of a metal plate constituting the wave-shaped component and abut on the longitudinal surface portion of the side sill inner so as to abut on the longitudinal surface portion.

However, as illustrated in FIG. 1, the end 20a on the vehicle inner side of the impact absorbing structure 20 is preferably connected to the longitudinal surface portion 11a of the side sill inner 11, since the crash energy absorption performance at the time of a side crash is good and favorable.

In the present invention, an end 20b on the vehicle outer side of the impact absorbing structure 20 may be connected to the longitudinal surface portion 13a of the side sill outer 13. As a mode in which the end 20b on the vehicle outer side of the impact absorbing structure 20 is connected to the longitudinal surface portion 13a of the side sill outer 13, for example, flange portions bent from the distal end at the end on the vehicle outer side may be provided and joined (spot welding or the like) to the longitudinal surface portion of the side sill outer.

However, in a case where a flange portion connected via a bent portion bent in the vehicle vertical direction with a predetermined curvature radius is provided at the end on the vehicle outer side of the impact absorbing structure for connection to the side sill outer, stiffness against a load input at the time of a side crash may be lowered. Therefore, as illustrated in FIG. 1, it is preferable that the impact absorbing structure 20 is not provided with a flange at the end on the vehicle outer side and that the distal end on the vehicle outer side abuts on the longitudinal surface portion 13a of the side sill outer 13 in an abutting manner. As a result, the impact absorbing structure 20 can receive the load input to the side sill 10 without reducing the stiffness, and thus the rising of the load at the initial stage of the crash can be made faster, and the crash energy absorption amount can be increased.

In the impact absorbing structure 20, both the upper wave-shaped component 21 and the lower wave-shaped component 23, or one of the upper or lower wave-shaped component 21 or 23 may abut against the longitudinal surface portion 11a of the side sill inner 11 and/or the longitudinal surface portion 13a of the side sill outer 13.

The present invention does not exclude a structure in which a gap is included between the end 20b on the vehicle outer side of the impact absorbing structure 20 and the side sill outer 13, and a structure in which a gap is included between the end 20a on the vehicle inner side and the side sill inner 11. That is, the impact absorbing structure 20 is only required to be supported in the side sill 10 by the end 20a on the vehicle inner side being connected to the longitudinal surface portion 11a of the side sill inner 11 or the end 20b on the vehicle outer side being connected to the longitudinal surface portion 13a of the side sill outer 13.

In the side sill structure 1 according to the present embodiment, as described above, the bottom surfaces of the upper wave-shaped component 21 and the lower wave-shaped component 23 are joined to each other in a state where the recessed shape 21b and the recessed shape 23b facing each other are shifted in the vehicle longitudinal direction. The shift amount of the recessed shape 21b and the recessed shape 23b in the vehicle longitudinal direction may be determined such that the bottom surfaces can be joined to each other.

FIG. 4 illustrates the shift amount between the recessed shape 21b of the upper wave-shaped component and the recessed shapes 23b of the lower wave-shaped component 23. In the wave-shaped component 21, a center-to-center distance between the protruding shape 21a and the recessed shape 21b adjacent to each other in the vehicle longitudinal direction (distance between broken lines passing through • in FIG. 4) is denoted as W1. Denoting a shift amount between the recessed shapes 21b of the upper wave-shaped component 21 and the recessed shapes 23b of the lower wave-shaped component 23 (center-to-center distance of the recessed shapes) as W2, the shift amount W2 is preferably within a range of 20% to 50% of W1 (0.2 × W1 ≤ W2 ≤ 0.5 × W1).

In a case where the shift amount W2 is less than 20% of W1 (W2 < 0.2 × W1), buckling deformation of the ridgeline of the upper wave-shaped component 21 and the ridgeline of the lower wave-shaped component 23 occurs substantially simultaneously, and thus an axial crush mode in which bellows-shaped buckling deformation occurs in the wave-shaped component 21 and the wave-shaped component 23 is obtained, and the effect of suppressing the increase in the load in a crash process after the buckling deformation is small. In addition, in a case where the shift amount W2 exceeds 50% of W1 (W1 > 0.5 × W1), the range in which the bottom surfaces of the recessed shape 21b and the recessed shape 23b overlap each other is narrow, and joining by spot welding or the like is difficult.

The recess 30 has a function of suppressing displacement of the end 20a on the vehicle inner side in the vehicle vertical direction in a deformation process of the impact absorbing structure 20 at the time of a side crash. Therefore, the recess amount D of the recess 30 toward the vehicle inner side is only required to be set so as to exert this function. Therefore, the recess amount D of the recess 30 is preferably in a range of 0.8 to 1.2 times the height h of the impact absorbing structure 20 in the vehicle vertical direction. The height h of the impact absorbing structure 20 in the vehicle vertical direction refers to the height of the pair of wave-shaped components 21 and 23 provided side by side in the vehicle vertical direction.

If the recess amount D of the recess 30 is less than 0.8 times the height h of the impact absorbing structure 20, the cross section of the side sill 10 is opened vertically and undergoes cross-section collapsing at the time of a side crash, and the recess 30 is also deformed so as to be opened vertically, and the end 20a on the vehicle inner side of the impact absorbing structure 20 is detached from the recess 30. In addition, in a case where the recess amount D of the recess 30 exceeds 1.2 times the height h, the recess 30 interferes with a floor crossmember, a battery pack, or the like disposed on the vehicle inner side with respect to the side sill inner 11, and thus there is a possibility that the structure of the floor crossmember or the battery pack needs to be greatly modified.

In addition, in a case where the flange portion 25 is provided at the end 20a on the vehicle inner side of the impact absorbing structure 20 and the flange portion 25 is spot-welded to the bottom portion 31 of the recess 30, the height of the recess 30 in the vehicle vertical direction is only required to be set to such a height that a work space for welding the flange portion 25 can be secured. From the above, the height H of the recess 30 in the vehicle vertical direction is preferably 1.3 to 1.4 times the height h (see FIG. 1(a)) of the impact absorbing structure 20.

The metal plate used for the impact absorbing structure 20 preferably has a tensile strength of a 590 MPa class or more. As for the crash worthiness of the impact absorbing structure 20, as the load (buckling strength) at the time of turning to plastic deformation through elastic deformation immediately after the start of deformation of the impact absorbing structure 20 at the time of a side crash is higher, buckling deformation is less likely to occur, and the crash worthiness is better. Since the buckling strength increases as the tensile strength (yield strength) of the metal plate used for the impact absorbing structure 20 increases, it is preferable to use a metal plate of 590 MNPa class or higher having a tensile strength higher than that of common steel.

In addition, in a case where a high-tensile steel sheet is used for the impact absorbing structure 20, the impact absorbing structure 20 disposed in the side sill 10 also functions as a reinforcement of the side sill 10. Therefore, the metal plate used for the impact absorbing structure 20 is particularly preferably a high-tensile steel sheet of a 980 MPa class or higher.

Furthermore, the metal plates used for the wave-shaped components 21 and 23 of the impact absorbing structure 20 preferably have a yield strength equal to or lower than the yield strength of a metal plate used for the floor crossmember 103 (FIG. 5). This is for the impact absorbing structure 20 to reliably undergo buckling deformation at the time of a side crash, before the floor crossmember 103 does, in order to sufficiently absorb the crash energy to suppress deformation of the floor crossmember 103.

In a case where the yield strength of the metal plate constituting the impact absorbing structure 20 is substantially at the same level as the yield strength of the metal plate constituting the floor crossmember 103, it is preferable that a buckling strength (= load at which the member itself starts buckling deformation) of the impact absorbing structure 20 is made lower than the buckling strength of the floor crossmember 103 by applying a bead (crush beat) or the like to the wave-shaped components constituting the impact absorbing structure 20 to enable buckling deformation with the bead as a starting point.

In the side sill structure 1 illustrated in FIG. 1, the impact absorbing structure 20 is supported in the side sill 10 with the end 20a on the vehicle inner side joined (welded or bonded) to the bottom portion 31 of the recess 30 in the longitudinal surface portion 11a of the side sill inner 11. However, as illustrated in FIG. 7, the impact absorbing structure 20 may be supported in the side sill 10 via a structure for support 37.

In FIG. 7(a), an upper end of a structure for support 37 is joined to a lower surface of the impact absorbing structure 20, and a lower end is joined to flange portions 11c and 13c of the side sill 10. In FIG. 7(b), one end side of a structure for support 37 is joined to the lower surface of the impact absorbing structure 20, and the other end side is joined to the longitudinal surface portion 13a of the side sill outer 13. In FIG. 7(c), the impact absorbing structure 20 is supported by structures for support 37 arranged both above and below the impact absorbing structure 20. Modes in which the impact absorbing structure 20 is supported by a structure for support 37 are not limited to those of FIGS. 7(a) to 7(c). For example, the impact absorbing structure 20 may be supported only by a structure for support 37 disposed above the impact absorbing structure 20 in the side sill structure 1 illustrated in FIG. 7(c).

In addition, at least one of welding such as spot welding, mechanical fastening using a bolt, a rivet, or the like, or adhesion may be used for joining between the structure for support 37 and the impact absorbing structure 20 and the side sill 10.

The wave-shaped components 21 and 23 of the side sill structure 1 according to the present embodiment have the same wave shape in a cross section orthogonal to the vehicle width direction except for those disposed upside down. It is preferable that the height or the depth of each of the protruding shapes 21a and 23a and the recessed shapes 21b and 23b in the wave-shaped components 21 and 23 is 15 mm to 100 mm, that the width of the top surface of the protruding shape 21a and the bottom surface of the recessed shape 21b is 15 mm to 150 mm, and that the inclination angle of a wall surface of each of the protruding shape 21a and the recessed shape 21b (angle on the acute angle side formed by the wall portion and a vertical line horizontal in the vehicle vertical direction) is 1° to 30°. As a result, the bottom surfaces of the recessed shapes are joined in a shifted state, and the ridgelines of the protruding shapes and the recessed shapes are crushed at the time of a side crash, whereby crashworthiness can be improved.

Furthermore, the protruding shapes and the recessed shapes of the wave-shaped components are not limited to the same shape in the cross section orthogonal to the vehicle width direction, and may be different shapes. For example, the width of the bottom surface of the recessed shape may be made wider than the width of the upper surface of the protruding shape in order to make it easier for the bottom surfaces of the recessed shapes facing each other in the pair of wave-shaped components to be joined to each other.

### [Example 1]

An analysis for verifying the effects of the side sill structure for an automobile according to the present invention has been performed, and thus this will be described below.

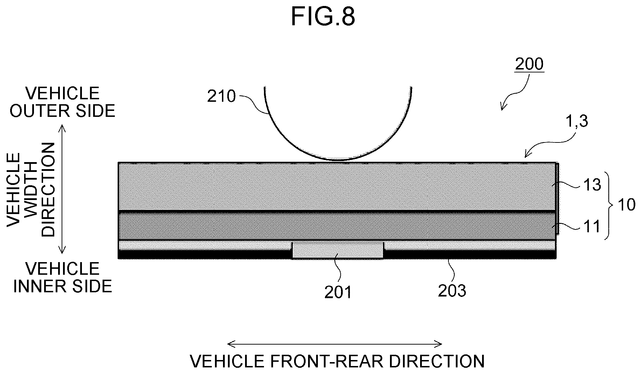

In Example 1, for the purpose of evaluating the crash worthiness of the side sill structure at the time of a side crash of the vehicle, as illustrated in FIG. 8, a crashworthiness analysis of a crashworthiness test was performed in which a crash body 210 is caused to crash into a side of the side sill 10 in a test piece 200 including the side sill structure 1.

The test piece 200 simulates the vehicle side structure 100 described above, and includes a floor crossmember simulator 201 corresponding to the floor crossmember 103, a battery case wall portion 203 corresponding to the side portion 105a of the battery case 105, and a battery case bottom plate portion (not illustrated) corresponding to the bottom plate 105b of the battery case 105 on the side opposite to the crash body 210 in the side sill 10. In the test piece 200, it is based on the premise that the battery case bottom plate portion is fixed to the side sill inner 11 with a fixing bolt. Furthermore, the length of the floor crossmember simulator 201 in the vehicle longitudinal direction was set to 160 mm.

In the crashworthiness analysis, as illustrated in FIG. 8, the crash body 210 was caused to collide in the vehicle width direction of the test piece 200. In this example, the crash body 210 was set to a rigid pole having a radius R of 127 mm (corresponding to a diameter of 254 mm), and had an initial speed of 35.0 km/h and a maximum intrusion amount of 80 mm. In addition, the load bearing capacity (allowable load) of the floor crossmember simulator 201 was set to be less than or equal to 500 kN, and the target value of the crash energy absorption amount by the side sill structure was set to 27 kJ (corresponding to 90% of the crash energy by the crash body 210).

In the crashworthiness analysis, as illustrated in FIG. 8, the deformation behavior of the side sill 10 in a crash process in which the crash body 210 having crashed into the side of the side sill 10 intrudes into the side sill 10 was obtained. From the deformation behavior of the side sill 10, the relationship between the load input to the side sill 10 and the stroke and the crash energy absorption amount from the crash start to reach the maximum intrusion amount were obtained. The load input to the test piece 200 was set to a load transmitted to a rigid jig used for fixing the test piece 200.

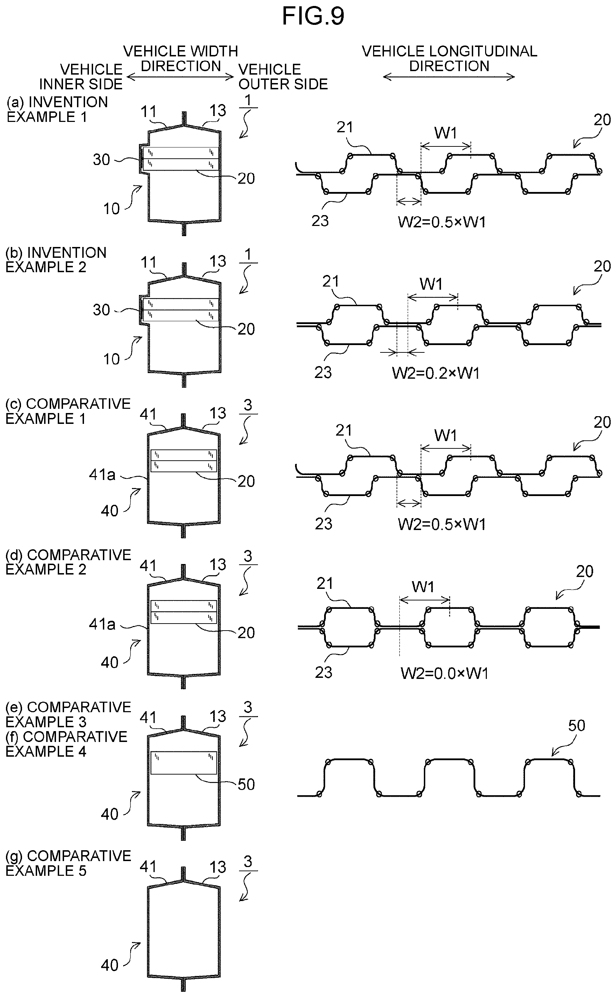

In FIG. 9, side sill structures to be tested in Examples are illustrated. In FIG. 9, (a) and (b) illustrate the side sill structure 1 of the invention (Invention Example 1 and Invention Example 2), and (c) to (g) illustrate a side sill structure 3 to be compared (Comparative Example 1 to Comparative Example 3). In addition, in each of FIGS. 9(a) to 9(g), the left diagram is a cross-sectional view orthogonal to the vehicle longitudinal direction of the side sill 10, and the right diagram is a cross-sectional view orthogonal to the vehicle width direction of the impact absorbing structure 20 in the side sill 10.

In the side sill structure 1 of Invention Example 1 illustrated in FIG. 9(a), as the impact absorbing structure 20 in the side sill 10, the recessed shapes 21b of the upper wave-shaped component 21 and the recessed shapes 23b of the lower wave-shaped component are arranged to face each other, and the bottom surfaces are joined in a state of being shifted in the vehicle longitudinal direction. In the side sill structure 1, the shift amount between a recessed shape 21b and a recessed shape 23b was set to W2 = 0.5 × W1 (center-to-center distance between the recessed shape 21b and the recessed shape 23b), and the recess amount D of the recess 30 formed in the side sill inner 11 was set to 35 mm (1.0 times the height h of the impact absorbing structure 20).

In the side sill structure 1 of Invention Example 2 illustrated in FIG. 9(b), the shift amount between the recessed shape 21b and the recessed shape 23b in Invention Example 1 was modified to W2 = 0.2 × W1.

The side sill structure 3 of Comparative Example 1 illustrated in FIG. 9(c) includes a side sill 40 having a side sill inner 41 having a longitudinal surface portion 41a obtained by removing the recess 30 of the side sill inner 11 in Invention Example 1 to flatten the longitudinal surface portion. In the impact absorbing structure 20, as in Invention Example 1, the shift amount W2 between the recessed shape 21b and the recessed shape 23b was set to W2 = 0.5 × W1. Note that in the impact absorbing structure 20, since the longitudinal surface portion 41a of the side sill inner 41 is flattened, the length in the vehicle width direction is made shorter than that of the impact absorbing structure of Invention Example 1.

Similarly to Comparative Example 1, the side sill structure 3 of Comparative Example 2 illustrated in FIG. 9(d) includes a side sill inner 41 having a longitudinal surface portion 41a obtained by removing the recess 30 of the side sill inner 11 in Invention Example 2 to flatten the longitudinal surface portion. In addition, in the impact absorbing structure 20, the shift amount W2 between the recessed shape 21b and the recessed shape 23b was W2 = 0.0 × W1, namely, the bottom surfaces were joined to each other without shifting the recessed shapes 21b and the recessed shapes 23b in the vehicle longitudinal direction. In the impact absorbing structure 20, since the longitudinal surface portion 41a of the side sill inner 41 is flattened, the length in the vehicle width direction is made shorter than that of the impact absorbing structure of Invention Example 2.

In the side sill structure 3 of Comparative Example 3 illustrated in FIG. 9(e) and Comparative Example 4 illustrated in FIG. 9(f), an impact absorbing structure 50 obtained by removing the lower wave-shaped component 23 from the impact absorbing structure 20 in Comparative Example 2 is disposed in the side sill 40. Furthermore, in Comparative Example 3 and Comparative Example 4, the plate thickness of a metal plate used as the material of the impact absorbing structure 50 is different. In Comparative Example 3, the plate thickness was set to 2.2 mm, which is the same as those of Invention Examples 1 and 2 and Comparative Examples 1 and 2, and in Comparative Example 4, the plate thickness was set to 3.2 mm, which is thicker than that of Comparative Example 3.

In the side sill structure 3 of Comparative Example 5 illustrated in FIG. 9(g), no impact absorbing structure was disposed in the side sill 40, and only the side sill 40 was provided.

Table 1 collectively illustrates the tensile strength and the plate thickness of the metal plate used for the side sill 10, the material (tensile strength) and the plate thickness of the wave-shaped components constituting the impact absorbing structures 20 and 50, the number of wave-shaped components, a coefficient α giving the shift amount W2 of the recessed shapes, and the recess amount D of the recess 30 formed in the longitudinal surface portion 11a of the side sill inner 11 in Invention Examples 1 and 2 and Comparative Examples 1 to 5.

**Table 1**

| | | Side Sill | Wave-Shaped Component (Impact Absorbing Structure) | | | Side Sill Inner | Crashworthiness Test Result | | |
|---|---|---|---|---|---|---|---|---|---|
| | | Tensile Strength/Plate Thickness (Outer, Inner) | Material/ Plate Thickness | Number of Components | Coefficient α (W2 = α * W1) | Recess Amount D of Recess/mm | Maximum Intrusion Amount of Crash Body/mm | Crash Energy Absorption Amount/kJ | Maximum Load/kN |
| (a) | Invention Example 1 | 1470 MPa/ (1.4 mm, 1.6 mm) | 980 MPa/ 2.2 mm | 2 | 0.5 | 35 | 79.9 | 30.0 | 465 |
| (b) | Invention Example 2 | 1470 MPa/ (1.4 mm, 1.6 mm) | 980 MPa/ 2.2 mm | 2 | 0.2 | 35 | 80.0 | 27.9 | 469 |
| (c) | Comparative Example 1 | 1470 MPa/ (1.4 mm, 1.6 mm) | 980 MPa/ 2.2 mm | 2 | 0.5 | - | 80.0 | 24.3 | 403 |
| (d) | Comparative Example 2 | 1470 MPa/ (1.4 mm, 1.6 mm) | 980 MPa/ 2.2 mm | 2 | 0 | - | 80.0 | 25.8 | 514 |
| (e) | Comparative Example 3 | 1470 MPa/ (1.4 mm, 1.6 mm) | 980 MPa/ 2.2 mm | 1 | - | - | 80.0 | 17.4 | 348 |
| (f) | Comparative Example 4 | 1470 MPa/ (1.4 mm, 1.6 mm) | 980 MPa/ 3.2 mm | 1 | - | - | 80.0 | 29.3 | 526 |
| (9) | Comparative Example 5 | 1470 MPa/ (1.4 mm, 1.6 mm) | - | 0 | - | - | 80.0 | 1.3 | 16 |

FIG. 10 is a diagram illustrating a deformation mode of the impact absorbing structure 20 in the crashworthiness test of the test piece 200 having the side sill structure 1 of Invention Example 1. FIG. 10(a) is a perspective view of the impact absorbing structure 20 in the side sill 10 as viewed from above, FIG. 10(b) is an oblique view of the impact absorbing structure 20, and FIG. 10(c) is a cross-sectional view in the vehicle vertical direction passing through the center line of the crash body 210.

In the crashworthiness test in which the crash body 210 crashes into the side of the test piece 200, the crash body 210 crashes into the impact absorbing structure 20 at a position where the center line of the crash body 210 and the impact absorbing structure 20 illustrated in FIG. 10(a) intersect. As illustrated in FIG. 10(a), the center line of the crash body 210 intersects with the lower wave-shaped component 23 at the top surface of a protruding shape 23a and intersects with the upper wave-shaped component 21 at the bottom surface of a recessed shape 21b interposed between a joined portion with the lower wave-shaped component 23 (mark • in FIG. 10(a)) and the ridgeline of a protruding shape 21a. The bottom surfaces of the recessed shapes 23b in the lower wave-shaped component 23 have low deformation resistance, whereas the bottom surfaces of the recessed shapes 21b in the upper wave-shaped component 21 have relatively high deformation resistance. Therefore, in the impact absorbing structure 20, the out-of-plane deformation of the protruding shapes 23a of the lower wave-shaped component 23 is large.

In addition, as illustrated in FIG. 10(c), in the impact absorbing structure 20, due to the difference in deformation resistance between the upper wave-shaped component 21 and the lower wave-shaped component 23, a moment is generated that rotates about the axis in the vehicle longitudinal direction such that the end 20b on the vehicle outer side faces downward and that the end 20a on the vehicle inner side faces upward. Then, in each of the wave-shaped components 21 and 23 around the crash position of the crash body 210, buckling deformation occurs such that both ends on the vehicle inner side and the vehicle outer side are bent out of the plane in the rotation direction, whereby the impact absorbing structure 20 is inclined with respect to the horizontal plane in the vehicle width direction.

For this reason, in the impact absorbing structure 20, bellows-shaped buckling deformation does not occur after the first buckling deformation, and the portions of the wave-shaped components 21 and 23 that have been buckled and deformed continue to be bent. As a result, the side sill structure 1 of Invention Example 1 can suppress the load fluctuation after the impact absorbing structure 20 is buckled in the crash process, and can achieve the ideal load-stroke curve illustrated in FIG. 2.

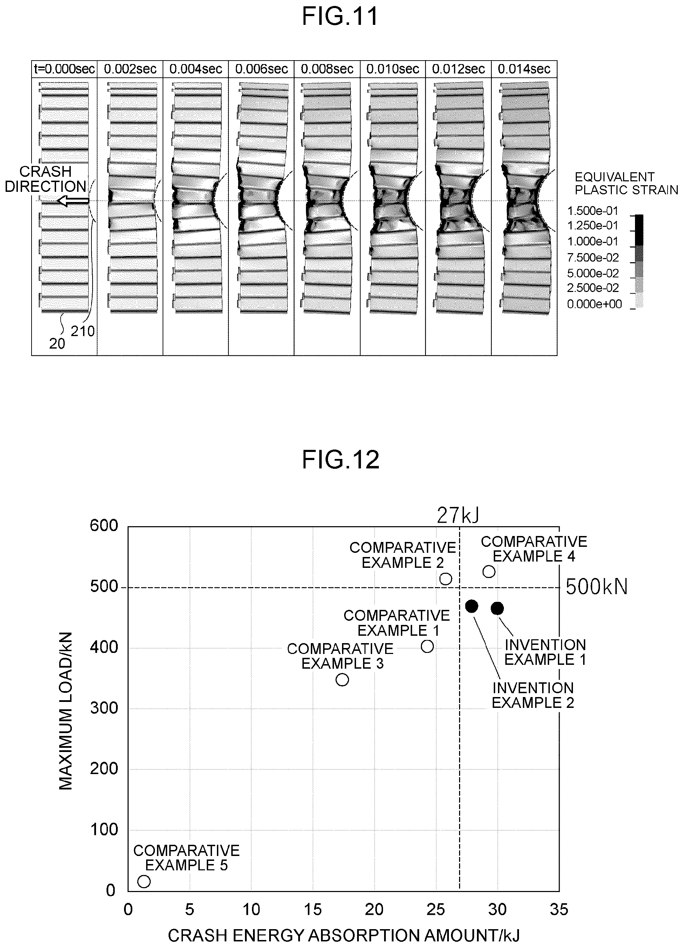

FIG. 11 is a diagram illustrating the deformation behavior of the impact absorbing structure 20 in the crashworthiness test of the test piece 200 having the side sill structure 1 of Invention Example 1. FIG. 11 is a contour diagram illustrating a distribution of equivalent plastic strain of the impact absorbing structure from the crash start of the crash body, and t represents an elapsed time (s) from the crash start.

In the impact absorbing structure 20, immediately after the start of the crash, the end 20b on the vehicle outer side, which is a side into which the crash body 210 crashes (crash end side), and an R portion (bent portion) of a flange joined to the side sill outer 13 were deformed (t up to 0.002 sec).

As the deformation progressed, the distal end on the crash end side was deformed along the shape of the crash body 210; however, the strain expanded in the vehicle longitudinal direction at the end 20a on the side sill inner 11 side which is opposite to the crash end side, and the deformation occurred in a range larger than the diameter of the crash body (t up to 0.006 sec).

Then, the lateral surface portions 11b of the side sill inner 11 and the ridgelines of the protruding shapes in the impact absorbing structure 20 were buckled with strain concentrated on the buckled portions, and new buckled portions were propagated in the vehicle longitudinal direction.

In Table 1 illustrated above, in Invention Examples 1 and 2 and Comparative Example 1 to 5, the crash energy absorption amounts at the time of maximum intrusion of the crash body 210 are compared. The maximum intrusion amount of the crash body 210 was 79.9 mm in Invention Example 1, and 80 mm in all of Invention Example 2 and Comparative Examples 1 to 5.

The maximum loads (maximum values of contact reaction force) in Invention Examples 1 and 2 were 465 kN and 469 kN, respectively, and both were less than 500 kN, which is an allowable load of the floor crossmember as a high yield strength member. Furthermore, the crash energy absorption amounts were 30.0 kN and 27.9 kN, which exceeded the target crash energy absorption amount (= 27.0 kN).

On the other hand, in Comparative Example 1 in which the recess 30 was removed from the side sill structure 1 of Invention Example 1, in the crushing process of the side sill structure 3, the end 20a on the vehicle inner side of the impact absorbing structure 20 was greatly displaced to the vehicle upper side, and the crushing of the impact absorbing structure 20 did not sufficiently progress. As a result, the maximum load was 403 kN, which was lower than the maximum load (=465 kN) of Invention Example 1. Furthermore, the crash energy absorption amount at the maximum stroke amount of 80 mm was 403 kN, which was 13% lower than the amount of crash energy absorption (= 465 kJ) in Invention Example 1.

In Comparative Example 2 in which the bottom surfaces were joined without shifting the recessed shapes 21b of the upper wave-shaped component 21 and the recessed shapes 23b of the lower wave-shaped component 23 in the vehicle longitudinal direction, the positions of the ridgelines of the upper and lower wave-shaped components 21 and 23 in the vehicle longitudinal direction were concentrated. Therefore, in Comparative Example 2, the maximum load increased to 514 kN as compared with Comparative Example 1, and exceeded the load bearing capacity (= 500 kN) of the floor crossmember. Furthermore, although the crash energy absorption amount was 25.8 kJ and increased as compared with Comparative Example 1 due to the increase in the maximum load as compared with Comparative Example 1, the target crash energy amount (27.0 kJ) could not be achieved.

In Comparative Example 3 in which the impact absorbing structure 50 obtained by removing the lower wave-shaped component from the impact absorbing structure 20 in Comparative Example 2 was disposed, the maximum load was 348 kN, which was significantly lower than those in Invention Examples 1 and 2. Furthermore, as the maximum load decreased, the crash energy absorption amount also decreased to 17.4 kJ, which was significantly below the target crash energy absorption amount.

In Comparative Example 4, the plate thickness of the impact absorbing structure 50 of Comparative Example 3 was made thicker (2.2 -> 3.2 mm), which resulted in a crash energy absorption amount of 29.3 kJ, whereby the target crash energy absorption amount was achieved. However, the maximum load was 526 kN, which greatly exceeded 500 kN, which is the load bearing capacity of the floor crossmember.

The result of Comparative Example 5 indicates the crash worthiness of the side sill 40 itself, and the crash energy absorption amount remained at 1.3 kJ.

Illustrated in FIG. 12 is a relationship between the crash energy absorption amount by the side sill structure and the maximum load input to the side sill structure in a side crash process in the crashworthiness test of Example 1. As illustrated in FIG. 12, in Invention Examples 1 and 2, a crash energy absorption amount higher than those in Comparative Examples 1 to 5 was achieved, and furthermore, the maximum load at the time of a side crash could be kept lower than the allowable load of the high yield strength member.

### [Example 2]

In Example 2, in the impact absorbing structure disposed in the side sill, the influence on the crash energy absorption amount at the time of a side crash was studied by differentiating the shift amount between a recessed shape of the upper wave-shaped component and a recessed shape of the lower wave-shaped component.

In Example 2, as in Example 1 described above, a crashworthiness analysis of a crashworthiness test in which the crash body 210 crashes into a side of the side sill 10 in the test piece 200 including the side sill structure 1 illustrated in FIG. 8 was performed. As in Example 1 described above, in the crashworthiness analysis, as illustrated in FIG. 8, the crash body 210 was caused to crash in a direction orthogonal to the vehicle longitudinal direction of the test piece 200 at an initial speed of 35.0 km/h and a maximum intrusion amount of 80 mm. The crash body 210 was set to a rigid pole having a radius R of 127 mm (corresponding to a diameter of 254 mm). In addition, the load bearing capacity of the floor crossmember simulator 201 was set to less than or equal to 500 kN, and a target value of the crash energy absorption amount by the side sill structure 1 was set to 27 kJ (corresponding to 90% of the crash energy by the crash body 210).

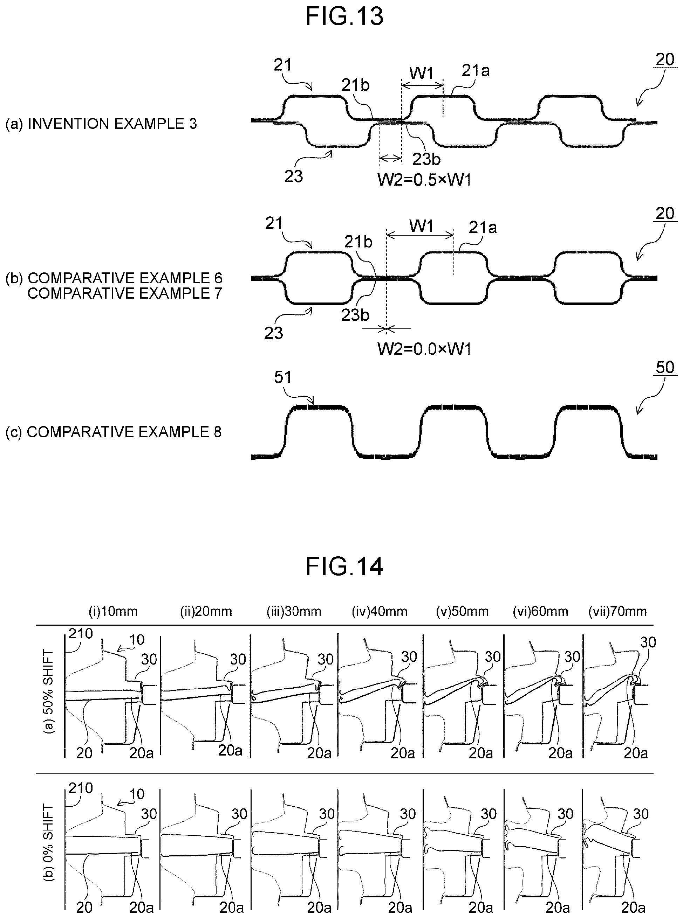

In Example 2, the test piece 200 in which the impact absorbing structure 20 illustrated in FIG. 13(a) is disposed in the side sill 10 was defined as Invention Example 3. In the impact absorbing structure 20 of Invention Example 3, a shift amount W2 between a recessed shape 21b of the upper wave-shaped component 21 and a recessed shape 23b of the lower wave-shaped component 23 was set to 50% (50% shift) of a center-to-center distance W1 between a protruding shape 21a and a recessed shape 21b adjacent to each other.

In Example 2, as comparison targets, a test piece 200 in which an impact absorbing structure 20 illustrated in FIG. 13(b) was disposed on the side sill 10 was set as Comparative Example 6, and a test piece in which an impact absorbing structure 50 illustrated in FIG. 13(c) was disposed in the side sill was set as Comparative Example 7.

In the impact absorbing structures 20 of Comparative Example 6 and Comparative Example 7, the bottom surfaces were joined to each other without shifting the center-to-center position between the recessed shapes 21b of the upper wave-shaped component 21 and the recessed shapes 23b of the lower wave-shaped component 23 in the vehicle longitudinal direction (0% shift). In addition, the impact absorbing structure 50 of Comparative Example 8 is configured by removing the lower wave-shaped component 23 from the impact absorbing structure 20 in Comparative Example 2 and including only the upper wave-shaped component 21 (one wave-shaped component).

In Invention Example 3, Comparative Example 7, and Comparative Example 8, metal plates having the plate thickness and the tensile strength illustrated in Table 1 described above were used so that the maximum load at the time of a side crash becomes less than or equal to 500 kN, which is the allowable load. In Comparative Example 6, the shift amount W2 in Invention Example 3 was modified from 50% to 0%, and a metal plate having the same plate thickness and tensile strength as in Invention Example 3 was used.

Illustrated in FIG. 14 are cross-sectional views of the side sill structure 1 illustrating a deformation process of the impact absorbing structure 20 disposed in the side sill 10. FIG. 14(a) includes cross-sectional views of the side sill structure of Invention Example 3, and FIG. 14(b) includes cross-sectional views of the side sill structure 1 of Comparative Example 6. In Invention Example 3, the recessed shapes of the upper wave-shaped component and the recessed shapes of the lower wave-shaped component in the impact absorbing structure face each other, and are joined in a vertically asymmetric manner in a state of being shifted in the vehicle longitudinal direction. As a result, a moment rotating about the axis in the vehicle longitudinal direction was generated, and buckling deformation occurred such that the ends on the vehicle inner side and the vehicle outer side were bent out of the plane in the rotation direction.

On the other hand, in Comparative Example 6, after the first buckling deformation had occurred at the end on the vehicle outer side, buckling deformation occurred one after another in a bellows shape while waving in such a manner as to form a plurality of folds from the vehicle outer side toward the vehicle inner side.

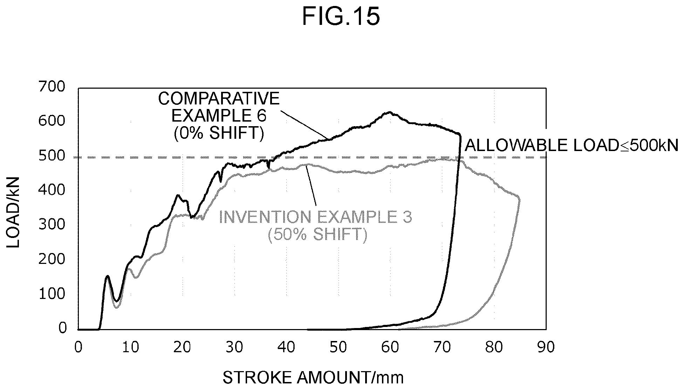

FIG. 15 is a graph illustrating load-stroke curves obtained by the crashworthiness analysis for the side crashworthiness tests of the test pieces 200 of Invention Example 3 and Comparative Example 6. In Invention Example 3, the load fluctuation after the first buckling deformation was suppressed, and a constant load less than or equal to the load bearing capacity (allowable load = 500 kN) was maintained. On the other hand, in Comparative Example 6, the load continued to increase even after the first buckling deformation and reached the maximum load (= 624 kN > 500 kN) exceeding the load bearing capacity.

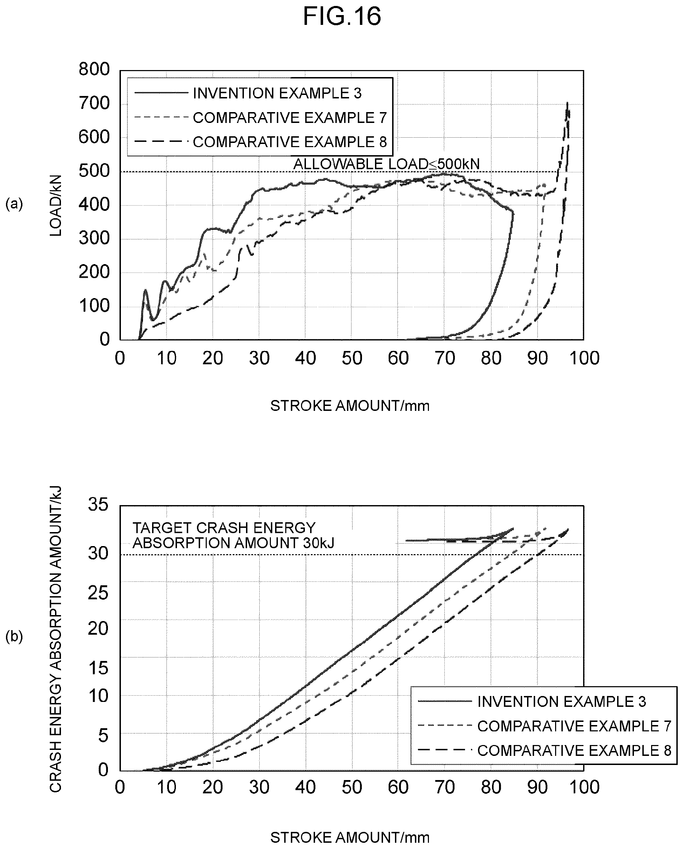

FIG. 16 illustrates graphs illustrating (a) Load-stroke curves and (b) Transition of crash energy absorption amount obtained by crashworthiness analysis for a side crashworthiness test of test pieces 200 of Invention Example 3, Comparative Example 7, and Comparative Example 8. In addition, Table 2 collectively illustrates the crash energy absorption amount, the maximum load, and the maximum intrusion amount of the crash body at a stroke amount of 80 mm obtained by the crashworthiness analysis for each of Invention Example 3, Comparative Example 7, and Comparative Example 8.

**Table 2**

| | Structure | Plate Thickness | Tensile Strength [MPa] | Crash Energy Absorption Amount (Stroke Amount of 80 mm) | Maximum Load (Stroke Amount Less Than or Equal to 80 mm) | Maximum Intrusion Amount (Crash Energy Absorption Amount of 30.0 kJ) |
|---|---|---|---|---|---|---|
| Invention Example 3 | 50% Shift | 2.2 mm | | 30.0 kJ | 495 kN | 80.0 mm |
| Comparative Example 6 | 0% Shift | 2.2 mm | | 30.0 kJ | 624 kN | 73.5 mm |
| Comparative Example 7 | 0% Shift | 1.65 mm | 980 MPa | 26.7 kJ | 475 kN | 87.3 mm |
| Comparative Example 8 | One Wave-Shaped Component | 2.8 mm | | 24.2 kJ | 479 kN | 93.2 mm |

In Invention Example 3, as illustrated in FIG. 16(a), it can be seen that the rising (stiffness) of the load at the initial stage of the crash is fast, the load fluctuation after buckling is suppressed, a constant load is maintained. Then, as illustrated in FIG. 16(b), 30 kJ, which is the target crash energy absorption amount, was reached at the stroke amount of 80 mm.

On the other hand, in Comparative Example 7, as illustrated in FIG. 16(a), the rising (stiffness) of the load at the initial stage of the crash was slow, and the load continued to increase even after buckling had occurred. The maximum load at a stroke amount less than or equal to 80 mm was 475 kN, which was lower than that in Invention Example 6. Therefore, as illustrated in FIG. 16(b), the crash energy absorption amount in the crash process transitioned at a value lower than that in Invention Example 3, and the crash energy amount at the stroke amount of 80 mm was 26.7 kJ. The maximum intrusion amount of the crash body required to achieve the target crash energy absorption amount of 30 kJ was 87.3 mm, which was larger than that in Invention Example 3.

In Comparative Example 8, as illustrated in FIG. 16(a), the rising (stiffness) of the load at the initial stage of the crash was slower than that in Comparative Example 7, and the load continued to increase even after buckling had occurred. Although the maximum load at a stroke amount less than or equal to 80 mm was 479 kN, which was almost equivalent to that in Comparative Example 7, the crash energy absorption amount in the crash process transitioned at lower values than those in Comparative Example 6, and the crash energy amount at the stroke amount of 80 mm was 24.2 kJ. The maximum intrusion amount of the crash body required to achieve the target crash energy absorption amount of 30 kJ was 93.2 mm, which was larger than that in comparative example 7.

### Industrial Applicability

According to the present invention, it is possible to provide a side sill structure of an automobile in which crashworthiness at the time of a side crash is improved without increasing weight and manufacturing cost.

### Reference Signs List

1 SIDE SILL STRUCTURE (INVENTION EXAMPLE)
3 SIDE SILL STRUCTURE (COMPARATIVE EXAMPLE)
10 SIDE SILL
11 SIDE SILL INNER
11a LONGITUDINAL SURFACE PORTION
11b LATERAL SURFACE PORTION
11c FLANGE PORTION
13 SIDE SILL OUTER
13a LONGITUDINAL SURFACE PORTION
13b LATERAL SURFACE PORTION
13c FLANGE PORTION
20 IMPACT ABSORBING STRUCTURE
20a END ON VEHICLE INNER SIDE
20b END ON VEHICLE OUTER SIDE
21 UPPER WAVE-SHAPED COMPONENT
21a PROTRUDING SHAPE
21b RECESSED SHAPE
23 LOWER WAVE-SHAPED COMPONENT
23a PROTRUDING SHAPE
23b RECESSED SHAPE
25 FLANGE PORTION
30 RECESS
31 BOTTOM
33 WALL PORTION
35 L-SHAPE BRACKET
37 STRUCTURE FOR SUPPORT
40 SIDE SILL
41 SIDE SILL INNER
41a LONGITUDINAL SURFACE PORTION
50 IMPACT ABSORBING STRUCTURE
100 VEHICLE SIDE STRUCTURE
101 FLOOR PANEL
101a FLANGE PORTION
103 FLOOR CROSSMEMBER
103a END IN VEHICLE WIDTH DIRECTION
105 BATTERY CASE
105a SIDE PORTION
105b BOTTOM PLATE
105c MOUNTING FLANGE
107 BATTERY PACK
109 FIXING BOLT
200 TEST PIECE
201 FLOOR CROSSMEMBER SIMULATOR
203 BATTERY CASE WALL PORTION
210 CRASH BODY

## Claims

1. A side sill structure for an automobile, the side sill structure comprising:
a side sill having: a side sill inner extending in a vehicle longitudinal direction and having a groove shape opened toward a vehicle outer side in a vehicle width direction; and a side sill outer extending in the vehicle longitudinal direction and having a groove shape opened toward a vehicle inner side in the vehicle width direction, the side sill being formed by joining the side sill inner and the side sill outer to each other with the opening sides facing each other;
an impact absorbing structure that absorbs an impact input to the side sill at a time of a side crash of a vehicle, the impact absorbing structure disposed in the side sill, having an end on a vehicle inner side in the vehicle width direction connected to a bottom portion of the groove shape of the side sill inner, and/or having an end on a vehicle outer side in the vehicle width direction connected to a bottom portion of the groove shape of the side sill outer; and
a vertical restraint structure that restrains the end on the vehicle inner side in a vehicle vertical direction at the time of the side crash of the vehicle, the vertical restraint structure formed at the bottom portion of the side sill inner, wherein
the impact absorbing structure includes:
a pair of wave-shaped components having a wave shape in which a protruding shape and a recessed shape are alternately continuous in the vehicle longitudinal direction in a cross section orthogonal to the vehicle width direction, the pair of wave-shaped components arranged in the vehicle vertical direction,
the pair of wave-shaped components is made of a metal plate, and
the wave-shaped component on an upper side and the wave-shaped component on a lower side are arranged in such a manner that the recessed shape of the wave-shaped component on the upper side and the recessed shape of the wave-shaped component on the lower side face each other, and are joined in a state where the facing recessed shapes are shifted in the vehicle longitudinal direction.

2. The side sill structure for an automobile according to claim 1, wherein the vertical restraint structure is a recess provided in the bottom portion of the groove shape in the side sill inner, the recess being recessed toward the vehicle inner side in the vehicle width direction, and the end of the impact absorbing structure on the vehicle inner side is inserted into the recess.

3. The side sill structure for an automobile according to claim 1 or 2, wherein a distal end of the impact absorbing structure on the vehicle outer side in the vehicle width direction abuts against the bottom portion of the groove shape in the side sill outer.

4. The side sill structure for an automobile according to any one of claims 1 to 3, wherein a shift amount W2 of the recessed shapes in the vehicle longitudinal direction facing each other in the upper and lower wave-shaped components is in a range of 20% to 50% of a center-to-center distance W1 between the protruding shape and the recessed shape adjacent to each other in the vehicle longitudinal direction in the wave-shaped components.

5. The side sill structure for an automobile according to claim 2, wherein a recess amount D of the recess formed in the side sill inner is 0.8 times or more and 1.2 times or less a height h of the impact absorbing structure in the vehicle vertical direction.

6. The side sill structure for an automobile according to any one of claims 1 to 5, wherein the wave-shaped components are made of a metal plate having a tensile strength of a 590 MPa class or higher.
